# DEMANDE DE BREVET EUROPEEN

(11) **EP 2 301 511 A2**
(43) Date de publication de la demande: **30.03.2011**
(21) Numéro de dépôt: 10182101.5
(22) Date de dépôt: 29.09.2010
(51) Int. Cl.: A61J 9/00, A61J 11/04, B29C 49/00, B29C 49/06, B29D 22/00, A61J 11/00, B29C 49/64, B29C 49/70

(54) **Récipient à col fileté coopérant avec le filetage d'un bouchon et son procédé de fabrication**

(30) Priorité: 29.09.2009 FR 0956751
(71) Demandeur: Sobef Sierom Industries, 69800 Saint-Priest (FR)
(72) Inventeur: Andres, Laurent, 38230, Charvieu Chavagneux (FR)
(74) Mandataire: Cabinet Plasseraud

(57) **Abrégé**

La présente invention concerne un récipient comportant au moins un corps (1) sensiblement cylindrique muni à son extrémité supérieur d'un col fileté (2) et un bouchon (5) comprenant un taraudage (6) pratiqué dans la jupe latérale interne (7) dudit bouchon (5), ledit taraudage (6) coopérant avec le filetage du col (2) pour fermer le récipient, remarquable en ce que le corps (1) et le bouchon (5) sont obtenus en polyethersulfone.

Un autre objet de l'invention concerne un procédé de fabrication d'un récipient conforme à l'invention. Ledit procédé est remarquable en ce qu'il comprend au moins les étapes suivantes d'injection de polyethersulfone à une température comprise en 300 et 400°C à une pression comprise entre 1200 et 1400 bars dans un moule à dévissage maintenu à une température comprise entre 130 et 170°C et comportant au moins une empreinte de bouchon, puis de refroidissement de la matière dans le moule maintenu à une température comprise entre 130 et 170°C, inférieure à la température de fusion du polyethersulfone, pendant une durée comprise entre 25 et 35 secondes, de telle manière que le polyethersulfone se fige, et finalement d'éjection du ou des bouchons en polyethersulfone en utilisant la force d'ouverture de la presse du moule à dévissage, la presse coopérant avec le moule au moyen d'une vis à crémaillère.

## Description

### DOMAINE DE L'INVENTION

La présente invention concerne un récipient à col fileté coopérant avec le filetage d'un bouchon, le récipient et le bouchon étant avantageusement obtenus dans du polyethersulfone ne dégageant pas de bisphénol A, et son procédé de fabrication. La présente invention concerne plus particulièrement un biberon.

### ARRIERE PLAN DE L'INVENTION

Il est bien connu d'utiliser des biberons en matière plastique, et plus particulièrement des biberons en polycarbonates qui présentent l'avantage d'être transparent, de présenter une forte résistance à la chaleur et d'être particulièrement résistants aux chocs, contrairement aux biberons traditionnels en verre. Ainsi, la plupart des biberons commercialisés comportent d'une part un corps sensiblement cylindrique dont le col supérieur est muni d'un filetage coopérant avec le taraudage de la jupe latérale interne d'une bague recevant une tétine en silicone souple ou en caoutchouc naturel, et d'autre part un capuchon coiffant la tétine et venant s'emboiter par déformation élastique sur la bague, le corps cylindrique, la bague et le capuchon étant obtenus dans du polycarbonate.

Le polycarbonate est un polymère issu de la polycondensation du bisphénol A et d'un carbonate ou du phosgène, ou par transestérification. On obtient ainsi une matière plastique disposant d'excellentes propriétés mécaniques et d'une résistance thermique permettant une utilisation jusqu'à 120 °C.

Le Bisphénol A ou BPA est un composé chimique issu de la réaction entre deux équivalents de phénol et un équivalent d'acétone. La molécule contient deux groupements fonctionnels phénols et fait partie des composés organiques aromatiques. Ses autres noms sont aussi 4,4'-(propan-2-ylidène)diphénol ou p,p'-isopropylidènebisphénol. Comme le nonylphénol, le bisphénol A est un oestrogéno-mimétique capable de se lier au récepteur α des oestrogène.

Le bisphénol A est connu pour s'extraire des plastiques spontanément à très faible dose et plus significativement s'il est nettoyé avec des détergents puissants ou utilisé pour contenir des acides, ou des liquides à hautes températures. Par ailleurs, le bisphénol A peut être accumulé dans les tissus gras.

Or, depuis plusieurs années, il a été démontré que du bisphénol A est relâché dans les aliments lors de la chauffe des biberons, les quantités de bisphénol A pouvant alors entraîner des perturbations endocriniennes, participer à la survenue d'un diabète, de maladies cardiovasculaires et/ou d'anomalies du bilan hépatique. En effet, une équipe conduite par S.M Belcher a démontré que de faibles taux de bisphénol-A peuvent entraîner une altération du développement du foetus chez le rat « Le HH, Carlson EM, Chua JP, Belcher SM. Bisphenol A is released from polycarbonate drinking bottles and mimics the neurotoxic actions of estrogen in developing cerebellar neurons. Toxicol Lett. 2008 Jan 30;176(2):149-56*».*

Afin de remédier à cet inconvénient, on a déjà imaginé de fabriquer des biberons à partir de matières plastiques ne comportant pas de Bisphénol A, tel que le polyethersulfone par exemple.

Toutefois, le polyethersulfone présente des caractéristiques mécaniques moins intéressantes que le polycarbonate. En effet, la résistance mécanique du polyethersulfone est plus faible de sorte qu'il est difficile de fabriquer des biberons répondant aux critères de résistance mécanique.

Afin de remédier à cet inconvénient, on a déjà imaginé des procédés de fabrication de biberons procurant à ces derniers une résistance mécanique suffisante. C'est le cas notamment du brevet américain US 6,516,963 qui décrit un procédé de fabrication en polyethersulfone du corps cylindrique d'un biberon. Le procédé consiste à former un creux sensiblement hémi-cylindrique dans le fond du corps cylindrique lors de soufflage de la préforme en PES.

Ce type de biberon est néanmoins muni d'une bague et d'un capuchon obtenus dans du polycarbonate de sorte que, lors de la stérilisation desdits biberons, du bisphénol A est relâché par la bague et le capuchon. Le bisphénol A relâché par la bague et le capuchon vient alors se déposer sur les parois du corps cylindrique puis se dissoudre dans les aliments, tels que le lait par exemple, introduits dans le biberon.

En effet, lors du moulage de pièces en polyethersulfone, des déformations importantes et aléatoires apparaissent sur les pièces lors du démoulage. Ainsi, il est difficile de fabriquer des bagues et/ou des capuchons en PES et les différents fabricants continues de produire les bagues et les capuchons en polycarbonate.

On connaît également les biberons commercialisés sous la marque « Green to grow » qui comportent un corps sensiblement cylindrique obtenu en PES et une bague et un capuchon obtenus en polypropylène (PP) qui présente un faible retrait lors du moulage de pièces de l'ordre de 1 à 2,5% et de très faibles déformations lors du démoulage des pièces. Toutefois le polypropylène présente l'inconvénient d'être fragile, cassant, à basse température, sensible aux Ultra-violets (UV).

De la même manière, le document US 2009/127220 décrit un biberon comportant un corps sensiblement cylindrique muni à son extrémité supérieure d'un col fileté et un bouchon dit "bague" comprenant un taraudage pratiqué dans la jupe latérale interne dudit bouchon, ledit taraudage coopérant avec le filetage du col pour fermer le récipient. Le corps du biberon est obtenu dans des polymères ou du polyéthylène basse densité ou du polyéthylène haute densité, du polypropylène ou du polycarbonate ou du polyéthersulfone (PES), et le bouchon dit « bague » est obtenu dans du polyéthylène ou du polypropylène.

On notera que les bouteilles d'eau en plastique, usuellement obtenus en Polyéthylènetérephtalate (PET ou PETE) ou en Polychlorure de vinyle (PVC ou V), sont également susceptibles de porter atteinte à la santé des consommateurs, ces dernières libérant des phtalates et respectivement du plomb, du cadmium ou des composés organostanniques qui sont des substances toxiques couramment utilisées comme stabilisants dans les PVC et/ou des phtalates qui sont des substances toxiques couramment utilisées comme plastifiants.

Il y a donc un besoin pour produire des récipients à col fileté coopérant avec le filetage d'un bouchon et ne libérant pas de substances toxiques pour la santé.

### BREVE DESCRIPTION DE L'INVENTION

L'un des buts de l'invention est donc de remédier à ces inconvénients en proposant un récipient comportant au moins un corps sensiblement cylindrique muni à son extrémité supérieur d'un col fileté et un bouchon comprenant un taraudage pratiqué dans la jupe latérale interne dudit bouchon, ledit taraudage coopérant avec le filetage du col pour fermer le récipient, tel qu'un biberon ou une bouteille d'eau en matière plastique par exemple, de conception simple, peu onéreuse, résistant aux chocs et ne libérant aucune substance toxique pour la santé.

A cet effet et conformément à l'invention, il est proposé un récipient comportant au moins un corps sensiblement cylindrique muni à son extrémité supérieur d'un col fileté et un bouchon comprenant un taraudage pratiqué dans la jupe latérale interne dudit bouchon, ledit taraudage coopérant avec le filetage du col pour fermer le récipient, remarquable en ce que le corps et le bouchon sont obtenus en polyethersulfone.

Selon une variante d'exécution privilégiée, le bouchon comporte un trou central apte à recevoir une tétine, le bouchon formant ainsi une bague maintenant la tétine à l'extrémité du col du corps cylindrique.

Par ailleurs, ledit récipient comporte avantageusement un capuchon sensiblement hémisphérique, obtenu en polyethersulfone et apte à s'emboiter sur la jupe latérale externe du bouchon par déformation plastique.

Accessoirement, le corps cylindrique comporte dans sa partie médiane, deux méplats diamétralement opposés, afin de faciliter la préhension.

De manière avantageuse, la surface externe des méplats est granuleuse afin de former une zone de préhension anti-dérapante.

Un autre objet de l'invention concerne un procédé de fabrication d'un récipient comportant au moins un corps sensiblement cylindrique muni à son extrémité supérieur d'un col fileté obtenu par injection soufflage et un bouchon comprenant un taraudage pratiqué dans la jupe latérale interne dudit bouchon, ledit taraudage coopérant avec le filetage du col pour fermer le récipient ; Ledit procédé est remarquable en ce qu'il comprend au moins les étapes suivantes d'injection de polyethersulfone à une température comprise en 300 et 400°C à une pression comprise entre 1200 et 1400 bars dans un moule à dévissage maintenu à une température comprise entre 130 et 170°C et comportant au moins une empreinte de bouchon, puis de refroidissement de la matière dans le moule maintenu à une température comprise entre 130 et 170°C, inférieure à la température de fusion du polyethersulfone, pendant une durée comprise entre 25 et 35 secondes, de telle manière que le polyethersulfone se fige, et finalement d'éjection du ou des bouchons en polyethersulfone en utilisant la force d'ouverture de la presse du moule à dévissage, la presse coopérant avec le moule au moyen d'une vis à crémaillère.

De préférence, le moule à dévissage est maintenu à une température de 150°C, le polyethersulfone est injecté dans le moule à dévissage à une température de 370°C à une pression de 1300 bars et le polyethersulfone est refroidi pendant une durée de 30 secondes.

Par ailleurs, le procédé comprend également une étape de fabrication d'un capuchon sensiblement hémi-sphérique apte à s'emboiter sur la jupe latérale externe du bouchon par déformation plastique, ladite étape comportant les étapes suivantes d'injection de polyethersulfone à une température comprise en 300 et 400°C à une pression comprise entre 1200 et 1400 bars dans un moule du type bloc à canaux chauds maintenu à une température comprise entre 300 et 400°C et comportant au moins une empreinte de capuchon, puis de refroidissement de la matière dans le moule maintenu à une température comprise entre 130 et 170°C, inférieure à la température de fusion du polyethersulfone, pendant une durée comprise entre 25 et 35 secondes, de telle manière que le polyethersulfone se fige, et finalement d'éjection du ou des capuchons en polyethersulfone par une plaque lunette.

De préférence, le moule est maintenu à une température de 150°C, la variation de la température du moule est inférieure ou égale à 3°C, le polyethersulfone est injecté dans le moule à dévissage à une température de 370°C à une pression de 1200 bars et le polyethersulfone est refroidi pendant une durée de 28 secondes.

De plus, l'injection soufflage du corps comporte avantageusement au moins les étapes suivantes d'injection de polyethersulfone à une température comprise entre 360 et 380°C dans un moule pour la réalisation d'au moins une préforme, de maintien de la préforme en polyethersulfone à une température comprise entre 300 et 400°C, de transfert des préformes dans le moule de soufflage dans un temps inférieur à 10 secondes, de soufflage de la préforme jusqu'à l'obtention d'un corps sensiblement cylindrique, et finalement d'éjection du corps cylindrique.

### BREVE DESCRIPTION DES DESSINS

D'autres avantages et caractéristiques ressortiront mieux de la description qui va suivre de plusieurs variantes d'exécution, données à titre d'exemples non limitatifs, d'un récipient à col fileté coopérant avec le filetage d'un bouchon et de son procédé de fabrication conforme à l'invention, en référence aux dessins annexés, sur lesquels :
- la figure 1 est une vue en perspective d'un biberon conforme à l'invention,
- la figure 2 est une vue en élévation d'un biberon conforme à l'invention,
- la figure 3 est une représentation schématique en élévation d'un dispositif d'injection soufflage pour la mise en oeuvre du procédé de fabrication du corps d'un biberon conforme à l'invention,
- la figure 4 est une vue en perspective d'un moule pour la mise en oeuvre du procédé de fabrication du bouchon d'un biberon conforme à l'invention,
- la figure 5 est une vue en coupe transversale du moule représenté sur la figure 4,
- la figure 6 est une vue en coupe du moule représenté sur la figure 4 selon l'axe VI-VI',
- la figure 7 est une vue de dessus du moule représenté sur la figure 4,
- les figures 8A à 8F représentent les différentes étapes de fabrication des bouchons du biberon conforme à l'invention,
- la figure 9 est une vue en élévation d'un moule pour la mise en oeuvre du procédé de fabrication du capuchon du biberon conforme l'invention,
- la figure 10 est une vue en coupe selon l'axe X-X' du moule représenté sur la figure 9,
- la figure 11 est une vue de dessus du moule représenté sur les figure 9 et 10,
- la figure 12 est une vue en élévation de l'empreinte du moule représenté sur la figure 9,
- les figures 13A à 13F représentent les différentes étapes de fabrication des capuchons du biberon conforme à l'invention,
- la figure 14 est une vue en perspective de la partie mobile et de la partie fixe d'un moule pour la mise en oeuvre du procédé de fabrication de tétines conforme à l'invention,
- la figure 15 est une vue en élévation du moule, assemblé, représenté sur la figure 14.

### DESCRIPTION DETAILLEE DE L'INVENTION

On décrira ci-après, à titre d'exemple non limitatif, un récipient particulièrement destiné à l'alimentation des enfants, à savoir un biberon ; Toutefois, il est bien évident que le récipient suivant l'invention suivant l'invention pourra également être utilisé pour la conservation de l'eau minérale par exemple sans pour autant sortir du cadre de l'invention.

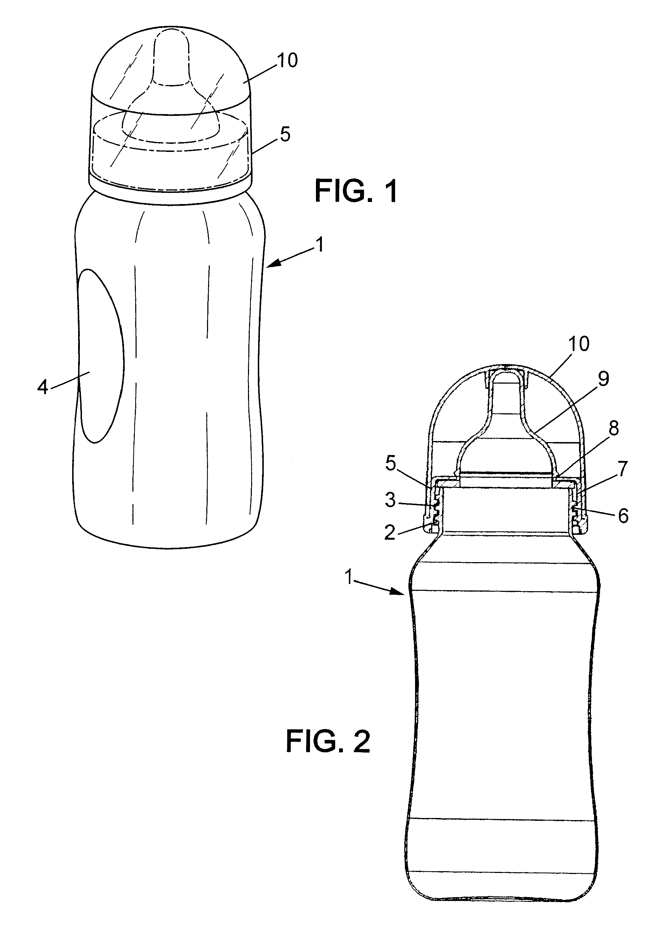

En référence aux figures 1 et 2, le biberon comporte un corps 1 sensiblement cylindrique muni à son extrémité supérieur d'un col 2 muni d'un filetage externe 3. Dans cet exemple particulier de réalisation le corps 1 est légèrement cintré dans sa partie médiane ; toutefois, il est bien évident que le corps pourra présenter une forme quelconque sans pour autant sortir du cadre de l'invention. Par ailleurs, le corps cylindrique 1 comporte avantageusement dans sa partie médiane deux méplats 4 diamétralement opposés, afin d'améliorer l'ergonomie de la préhension. Chaque méplat 4 présente une forme elliptique dont le grand axe est sensiblement parallèle à l'axe de révolution du corps cylindrique 1. La surface externe des méplats 4 est avantageusement granuleuse pour former des zones anti-dérapantes.

Le biberon comporte, par ailleurs, un bouchon 5 comprenant un taraudage 6 pratiqué dans la jupe latérale interne 7 dudit bouchon 5, ledit taraudage 6 coopérant avec le filetage 3 du col 2 du corps. Le bouchon 5 comporte un trou central 8 apte à recevoir une tétine 9, le bouchon 5 formant ainsi une bague permettant de maintenir la tétine 9 à l'extrémité supérieure du col du corps 1.

On observera que le bouchon 5 pourra être fermé, c'est-à-dire ne pas comporter de trou central 8, afin de permettre notamment la conservation de lait maternel obtenu en utilisant un tire-lait bien connu de l'homme du métier.

Accessoirement, le biberon comporte un capuchon 10 sensiblement hémisphérique apte à s'emboiter sur la jupe latérale externe du bouchon 5 par déformation plastique.

Selon une caractéristique essentielle de l'invention, le corps 1, le bouchon 5 et le capuchon 10 sont obtenus en polyethersulfone qui est une matière plastique qui ne libère pas de substances toxiques y compris lors de chauffage intense du récipient et lors de frottements pendant le nettoyage par exemple. On entend par un chauffage intense, un chauffage à une température supérieure à 70°C, mais inférieure à la température de fusion du polyethersulfone qui est de 360°C, pendant une durée quelconque.

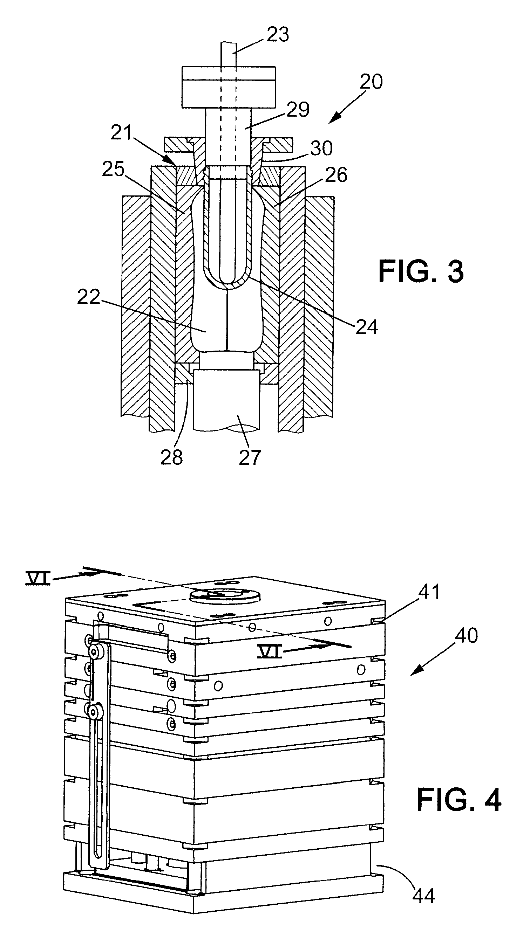

Le corps 1 est obtenu par un procédé d'injection soufflage du corps au moyen d'un dispositif d'injection soufflage 20 représenté sur la figure 3. Le dispositif d'injection soufflage 20 comporte un moule 21 définissant une cavité de soufflage 22, une tige d'étirage 23 et des moyens pour souffler de l'air comprimé dans une préforme 24. Le moule 21 comprend deux coques ajustables 25,26 et un segment de fond 27 cylindrique positionné sous les coques 25,26, entre ces dernières, un siège 28 supportant les coques 25,26. La tige d'étirage 23 s'étend à mi hauteur entre les coques 25,26 coaxialement avec le segment de fond 27. Un vérin, non représenté sur la figure 3, déplace la tige d'étirage 23 dans la cavité de soufflage 22 le long de l'axe de révolution du moule 21. Les moyens de soufflage comportent un noyau de soufflage 29 traversant une lèvre de soufflage 30, une entrée d'air connectée à une source d'air comprimé étant pratiquée à l'extrémité supérieure du noyau de soufflage 29.

Le procédé comporte ainsi une étape d'injection de polyethersulfone à une température comprise entre 360 et 380°C dans un moule pour la réalisation d'au moins une préforme 24, puis une étape de maintien de la préforme en polyethersulfone à une température de 360°C, puis un transfert des préformes 20 dans un moule de soufflage 20 tel que décrit précédemment dans un temps inférieur à 10 secondes, puis un soufflage de la préforme 24 jusqu'à l'obtention d'un corps 1 sensiblement cylindrique, et finalement une étape d'éjection du corps cylindrique.

Un tel procédé permet d'obtenir un corps translucide dont les parois présentent une faible épaisseur tout en présentant d'excellentes caractéristiques mécaniques telles qu'une grande résistance aux chocs notamment.

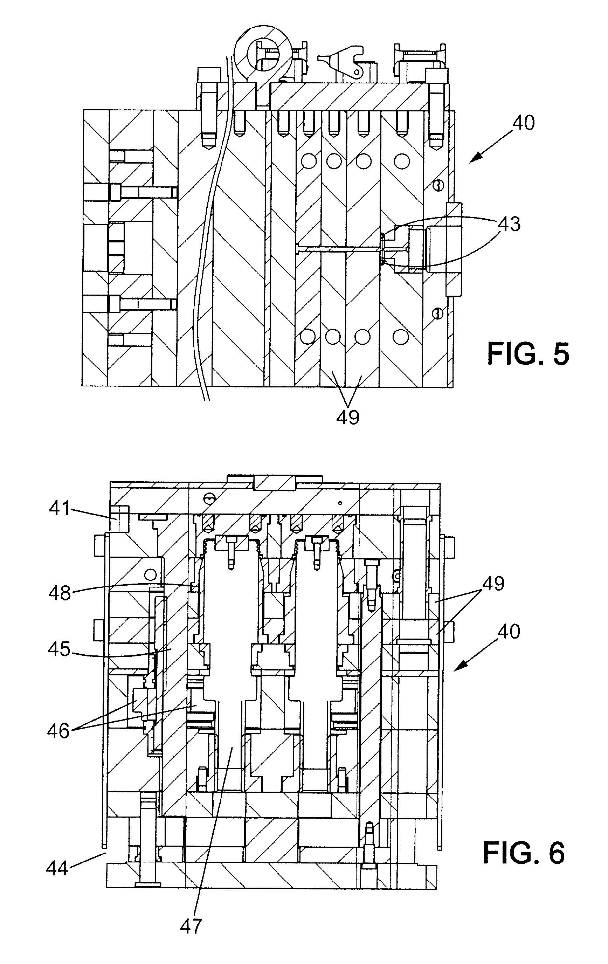

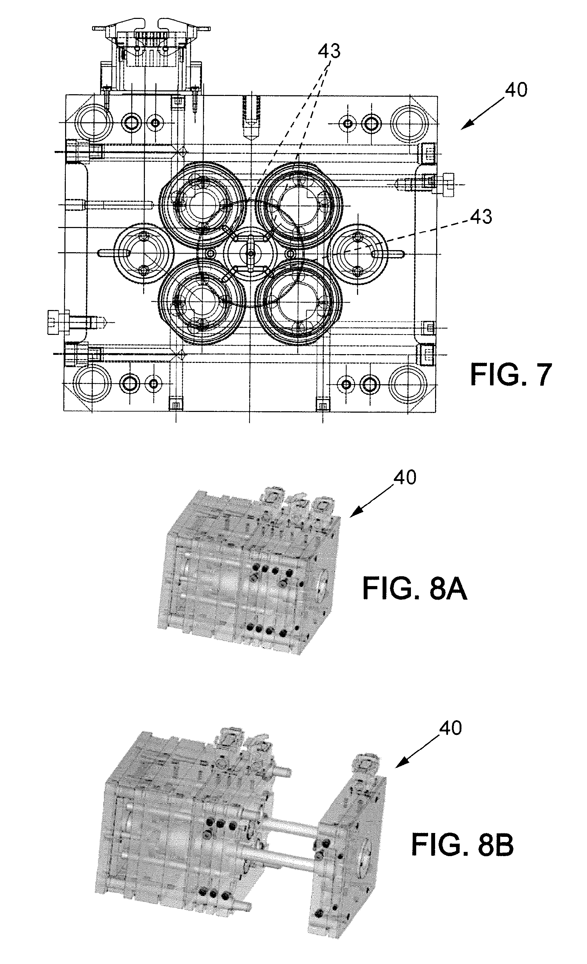

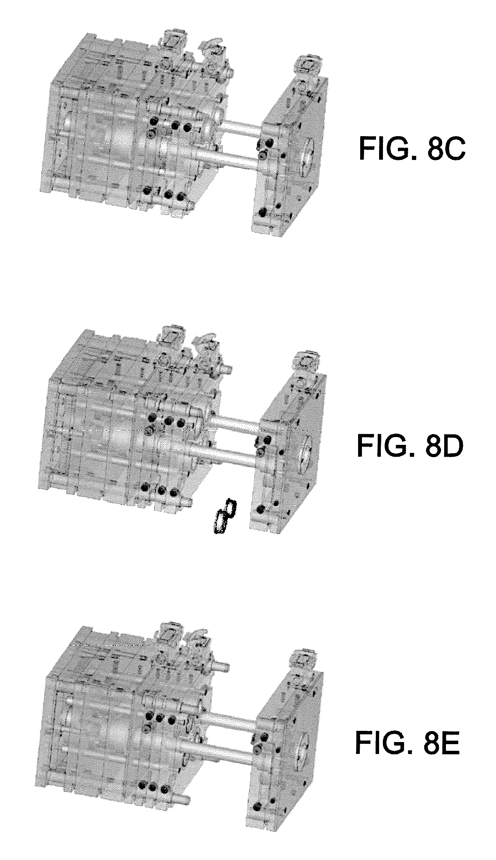

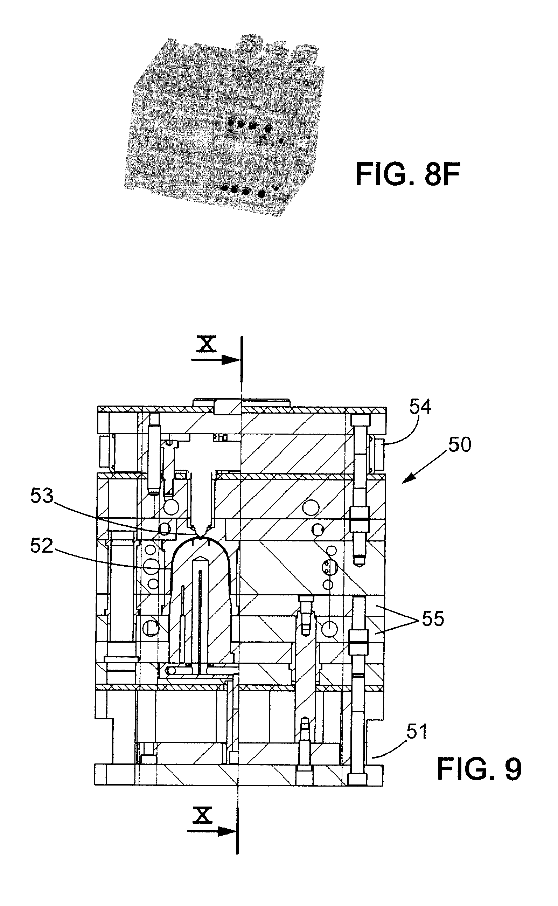

Pour la fabrication des bouchons, on injecte du PES avec une pression de 1300 bars en vis à une température de 370° dans un moule à dévissage 40 représenté sur les figures 4 à 7. Ledit moule à dévissage 40 comporte de manière usuelle différentes plaques coopérant les une avec les autres et formant d'une part une partie fixe solidaire de la partie fixe d'une presse à injection, non représentée sur les figures, au moyen de brides 41, l'une des plaques de la partie fixe comportant des empreintes 42 alimentées par des orifices d'injection sous-marine communément appelé « submarine gate » 43, et d'autre part une partie mobile solidaire de la partie mobile de la presse à injection au moyen de secondes brides 44. De manière particulièrement avantageuse, le moule à dévissage comporte une vis sans fin 45 coopérant avec des pignons 46 et 47 et des pièces de maintien 48 évitant la rotation des bagues lors de l'éjection de ces dernières. Ainsi, les bagues sont éjectées par une plaque lunette 49 de la partie mobile lors de l'ouverture de la presse à injecter. Lors de l'ouverture de la presse à injecter, la vis sans fin 45 est entraînée en rotation simultanément à l'ouverture des parties mobile et fixe du moule, procurant la rotation des pignons 46,47 et l'éjection des bagues comme il est représenté sur les figures 8A à 8F.

Ainsi, en référence aux figures 8A à 8F, la matière en fusion est injectée sur 4 empreintes en plaque de casse avec des orifices d'injection sous-marine dite entrées sous-marines ou « submarine gate » dans le moule à 150°. On laisse alors la matière figer pendant 30 secondes dans le moule, avant d'éjecter les bouchons. Pour l'éjection des bouchons, on utilise la force d'ouverture de la presse pour pouvoir dévisser les pièces. Pour pouvoir dévisser les pièces, une force d'ouverture variant de 100Kg Newton à 365 Kg Newton est nécessaire. Cette force ne peut pas être obtenue avec un système de vérins à crémaillère des moules de l'art antérieur qui procure une force de seulement 40 à 160 kg Newton. Conformément au procédé suivant l'invention, on utilise la force d'ouverture presse sur une vis sans fin dite vis crémaillère pour dévisser les bouchons et les éjecter. Après dévissage les pièces tombent en automatique dans un carton avec la carotte, et un tri est effectué. Les carottes sont rebroyées et les bagues emballées.

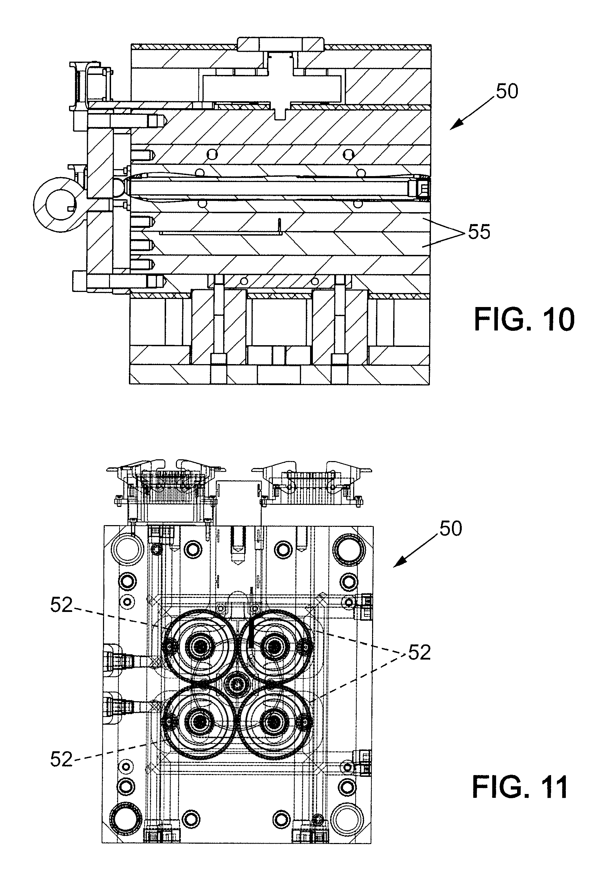

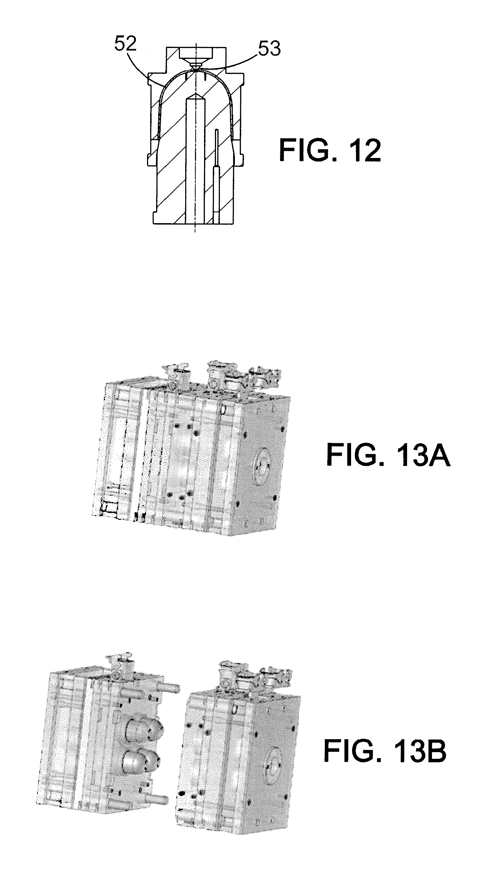

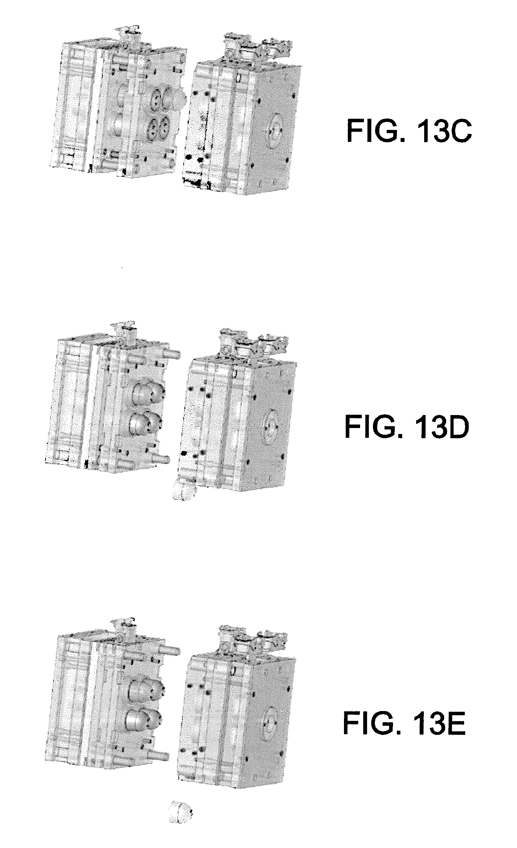

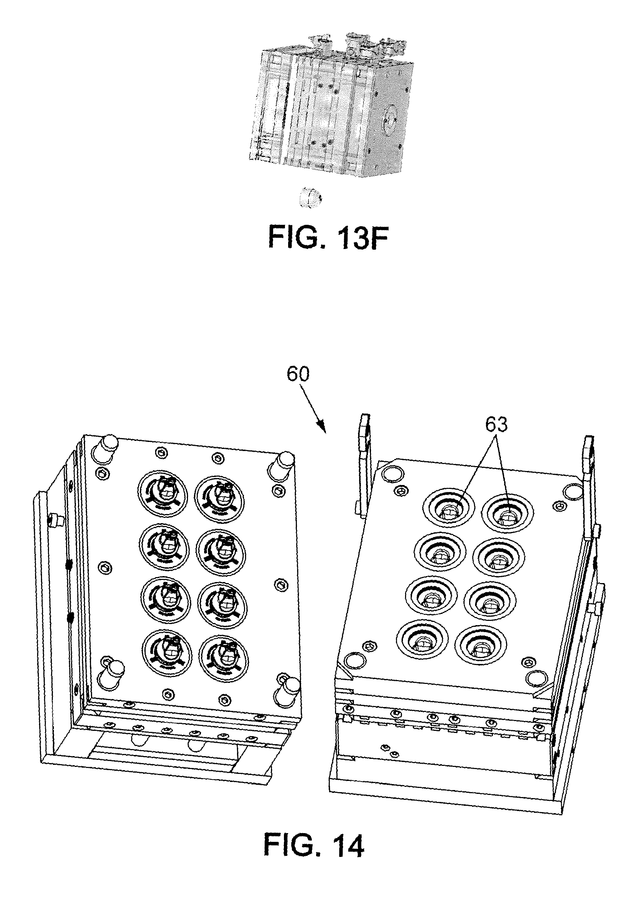

Par ailleurs, pour la fabrication des capuchons 10, on injecte du PES avec une pression de 1200 bars en vis à une température de 370°C dans un bloc à canaux chauds 50 pour répartir la matière sur 4 empreintes. Le bloc à canaux chauds 50 représenté sur les figures 9 à 12 comporte de manière usuelle différentes plaques coopérant les une avec les autres et formant d'une part une partie fixe solidaire de la partie fixe d'une presse à injection, non représenté sur les figures, au moyen de brides 51, l'une des plaques de la partie fixe comportant des empreintes 52 alimentées par des orifices d'injection sous-marine communément appelé entrées sous-marines ou « submarine gate » 53, et d'autre part une partie mobile solidaire de la partie mobile au moyens de secondes brides 54. Lors de l'ouverture de la presse à injecter, la plaque lunette 55 du moule à blocs chaud éjecte les capuchons comme il est représenté sur les figures 13A à 13F.

Ce bloc à canaux chauds est avantageusement en Inox avec double zone de chauffe bloc et buses pour un maintient constant de la température à 370°C, avec une possibilité de monter à un peu plus de 400°. Les pointes des buses sont également en Inox spécial trempé de telle manière que les capuchons obtenus soient propres, c'est-à-dire sans bavures, et que les embouts des buses ne se dégradent pas en cours d'injection. En effet, le PES crée des gaz très toxiques si elle n'est pas injectée à la bonne température et elle fait rouiller le bloc et le moule.

La matière en fusion est répartie dans un moule à 150°C. Pour obtenir cette température constante, le moule est régulé hydrauliquement et électriquement, afin d'avoir moins de 3 degrés d'écart de température dans le moule. Cette régulation thermique procure un retrait particulièrement faible qui permet de clipser le capuchon sur le bouchon par déformation plastique.

On laisse ensuite la matière figer pendant 28 secondes, puis on ouvre le moule, et on dévêtit les 4 pièces par une plaque lunette afin d'éviter les traces sur les pièces éjectées.

Les capuchons sortent finis sans perte matière, et peuvent être emballés.

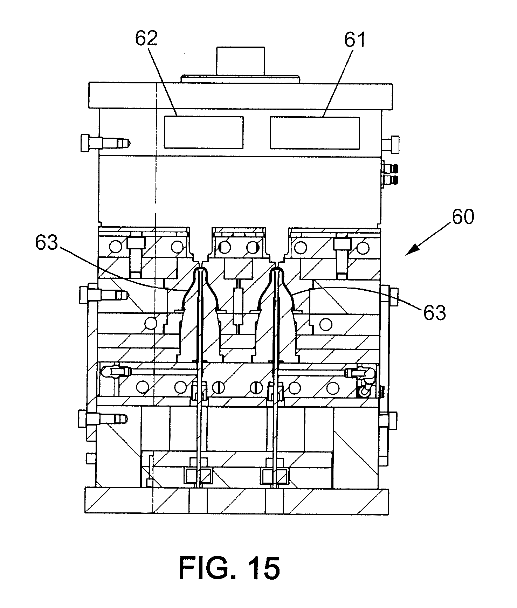

De plus, les tétines sont avantageusement obtenues en injectant du silicone liquide à 20°C dans un bloc à obturation à aiguilles 60 représenté sur les figures 14 et 15. Ledit bloc à obturation à aiguilles 60 comporte avantageusement des moyens de régulation thermique électrique 61 et hydraulique 62 (figure 15) afin de maintenir en permanence le bloc à la température idoine.

La matière est répartie sur 8 empreintes 63. Le bloc à obturation est maintenu en permanence à 20°C par une circulation d'eau réfrigérée. Durant cette injection, on ouvre les 8 aiguilles des 8 empreintes et la matière vient remplir ces 8 empreintes qui sont maintenues à une température de 180°C. Après ce remplissage, on ferme les aiguilles pour comprimer la matière dans les empreintes. Ensuite, on laisse vulcaniser la matière 35 secondes, puis on ouvre le moule afin d'éjecter les pièces au moyen de soupapes à air bien connu de l'Homme du Métier. On obtient ainsi 8 tétines en silicone liquide sans bavure et sans aucune perte matière contrairement aux procédés de fabrication des tétines de l'art antérieur. On referme alors le moule et l'opération est reprise pour un travail en série.

Les tétines sont ensuite passées en post-cure 4 heures à 200°C pour élimination totale des peroxydes, puis poinçonnées pour obtenir la fente d'ouverture de la tétine. Après, ces opérations les tétines sont lavées et emballées.

Enfin, il est bien évident que les exemples que l'on vient de donner ne sont que des illustrations particulières, en aucun cas limitatives quant aux domaines d'application de l'invention.

## Revendications

**1.** Récipient comportant au moins un corps (1) sensiblement cylindrique muni à son extrémité supérieur d'un col fileté (2) et un bouchon (5) comprenant un taraudage (6) pratiqué dans la jupe latérale interne (7) dudit bouchon (5), ledit taraudage (6) coopérant avec le filetage du col (2) pour fermer le récipient, **caractérisé en ce que** le corps (1) et le bouchon (5) sont obtenus en polyethersulfone.

**2.** Récipient suivant la revendication 1 **caractérisé en ce que** le bouchon (5) comporte un trou central (8) apte à recevoir une tétine (9).

**3.** Récipient suivant la revendication 2 **caractérisé en ce qu'**il comporte un capuchon (10) sensiblement hémisphérique, obtenu en polyethersulfone et apte à s'emboiter sur la jupe latérale (7) externe du bouchon (5) par déformation plastique.

**4.** Récipient suivant l'une quelconque des revendications 1 à 3 **caractérisé en ce que** le corps cylindrique (1) comporte dans sa partie médiane, deux méplats (4) diamétralement opposés, afin de faciliter la préhension.

**5.** Récipient suivant la revendication 4 **caractérisé en ce que** la surface externe des méplats (4) est granuleuse.

**6.** Procédé de fabrication d'un récipient comportant au moins un corps (1) sensiblement cylindrique muni à son extrémité supérieur d'un col fileté (2) obtenu par injection soufflage et un bouchon (5) comprenant un taraudage (6) pratiqué dans la jupe latérale (7) interne dudit bouchon (5), ledit taraudage (6) coopérant avec le filetage du col (2) pour fermer le récipient, **caractérisé en ce qu'**il comprend au moins les étapes suivantes de :
- injection de polyethersulfone à une température comprise en 300 et 400°C à une pression comprise entre 1200 et 1400 bars dans un moule à dévissage maintenu à une température comprise entre 130 et 170°C et comportant au moins une empreinte de bouchon,
- refroidissement de la matière dans le moule maintenu à une température comprise entre 130 et 170°C, inférieure à la température de fusion du polyethersulfone, pendant une durée comprise entre 25 et 35 secondes, de telle manière que le polyethersulfone se fige,
- éjection du ou des bouchons en polyethersulfone en utilisant la force d'ouverture de la presse du moule à dévissage, la presse coopérant avec le moule au moyen d'une vis à crémaillère.

**7.** Procédé suivant la revendication 6 **caractérisé en ce que** le moule à dévissage est maintenu à une température de 150°C.

**8.** Procédé suivant l'une quelconque des revendications 6 ou 7 **caractérisé en ce que** le polyethersulfone est injecté dans le moule à dévissage à une température de 370°C à une pression de 1300 bars.

**9.** Procédé suivant l'une quelconque des revendications 6 à 8 **caractérisé en ce que** le polyethersulfone est refroidi pendant une durée de 30 secondes.

**10.** Procédé suivant l'une quelconque des revendications 6 à 9 **caractérisé en ce qu'**il comprend une étape de fabrication d'un capuchon sensiblement hémisphérique apte à s'emboiter sur la jupe latérale externe du bouchon par déformation plastique, ladite étape comportant les étapes suivantes de :
- injection de polyethersulfone à une température comprise en 300 et 400°C à une pression comprise entre 1200 et 1400 bars dans un moule du type bloc à canaux chauds maintenu à une température comprise entre 130 et 170°C et comportant au moins une empreinte de capuchon,
- refroidissement de la matière dans le moule maintenu à une température comprise entre 130 et 170°C, inférieure à la température de fusion du polyethersulfone, pendant une durée comprise entre 25 et 35 secondes, de telle manière que le polyethersulfone se fige,
- éjection du ou des capuchons en polyethersulfone par une plaque lunette.

**11.** Procédé suivant la revendication 10 **caractérisé en ce que** le moule est maintenu à une température de 150°C.

**12.** Procédé suivant l'une quelconque des revendications 10 ou 11 **caractérisé en ce que** la variation de la température du moule est inférieure ou égale à 3°C.

**13.** Procédé suivant l'une quelconque des revendications 10 à 12 **caractérisé en ce que** le polyethersulfone est injecté dans le moule à dévissage à une température de 370°C à une pression de 1200 bars.

**14.** Procédé suivant l'une quelconque des revendications 10 à 13 **caractérisé en ce que** le polyethersulfone est refroidi pendant une durée de 28 secondes.

**15.** Procédé suivant l'une quelconque des revendications 6 à 14 **caractérisé en ce que** l'injection soufflage du corps comporte au moins les étapes suivantes de:
- d'injection de polyethersulfone à une température comprise entre 360 et 380°C dans un moule pour la réalisation d'au moins une préforme,
- maintien de la préforme en polyethersulfone à une température comprise entre 300 et 400°C,
- transfert des préformes dans le moule de soufflage dans un temps inférieur à 10 secondes,
- soufflage de la préforme jusqu'à l'obtention d'un corps sensiblement cylindrique, et
- éjection du corps cylindrique.
